# EUROPEAN PATENT APPLICATION

(11) **EP 4 362 459 A2**
(43) Date of publication of application: **01.05.2024**
(21) Application number: 24150561.9
(22) Date of filing: 09.03.2012
(51) Int. Cl.: H04N 19/00

(54) **A METHOD FOR DECODING VIDEO**

(30) Priority: 10.03.2011 US 201113045425; 10.03.2011 US 201113045442
(62) Divisional of application: 12755140.6
(71) Applicant: Velos Media International Limited, Dublin 18 (IE)
(72) Inventor: SEGALL, Christopher Andrew, Camas, Washington 98607 (US); MISRA, Kiran, Camas, Washington 98607 (US)
(74) Representative: Grünecker Patent- und Rechtsanwälte PartG mbB

(57) **Abstract**

A method for decoding video comprising (a) receiving entropy information suitable for decoding at least one of the tiles that is not aligned with any of the at least one slice, and (b) identifying at least one of the tiles that is not aligned with any of the at least one slice based upon signal within a bitstream of the frame without requiring entropy decoding to identify the signal.

## Description

### TECHNICAL FIELD

The present invention relates to a method for decoding video.

### BACKGROUND ART

Digital video is typically represented as a series of images or frames, each of which contains an array of pixels. Each pixel includes information, such as intensity and/or color information. In many cases, each pixel is represented as a set of three colors, each of which is defined by eight bit color values.

Video-coding techniques, for example H.264/MPEG-4 AVC (H.264/AVC), typically provide higher coding efficiency at the expense of increasing complexity. Increasing image quality requirements and increasing image resolution requirements for video coding techniques also increase the coding complexity. Video decoders that are suitable for parallel decoding may improve the speed of the decoding process and reduce memory requirements; video encoders that are suitable for parallel encoding may improve the speed of the encoding process and reduce memory requirements.

H.264/MPEG-4 AVC [Joint Video Team of ITU-T VCEG and ISO/IEC MPEG, "H.264: Advanced video coding for generic audiovisual services," ITU-T Rec. H.264 and ISO/IEC 14496-10 (MPEG4-Part 10), November 2007], and similarly the JCT-VC, ["Draft Test Model Under Consideration", JCTVC-A205, JCT-VC Meeting, Dresden, April 2010 (JCT-VC)], both of which are incorporated by reference herein in their entirety, are video codec (encoder/ decoder) specifications that use macroblock prediction followed by residual coding to reduce temporal and spatial redundancy in a video sequence for compression efficiency.

### SUMMARY OF INVENTION

One embodiment of the present invention disclose a method for decoding video. The method comprising: (a)
receiving a frame of said video that includes at least one slice and at least one tile, wherein each of said at least one slice is characterized that it is decoded independently of the other said at least one slice, wherein each of said at least one tile is characterized that it is a rectangular region of said frame and having coding units for said decoding arranged in a raster scan order, wherein said at least one tile of said frame are collectively arranged in a raster scan order of said frame; (b)
receiving entropy information suitable for decoding at least one of said tiles; (c) receiving information indicating that location of at least one tile is transmitted within a slice; (d)
receiving information indicating said location and information indicating number of said at least one tile.

One embodiment of the present invention disclose a method for decoding video. The method comprises (a) receiving a frame of said video that includes at least one slice and at least one tile, where each of said at least one slice and said at least one tile are not all aligned with one another, wherein each of said at least one slice is characterized that it is decoded independently of the other said at least one slice, wherein each of said at least one tile is characterized that it is a rectangular region of said frame and having coding units for said decoding arranged in a raster scan order, wherein said at least one tile of said frame are collectively arranged in a raster scan order of said frame; (b) receiving entropy information suitable for decoding at least one of said tiles that is not aligned with any of said at least one slice.

One embodiment of the present invention discloses a method for decoding video. The method comprises (a) receiving a frame of said video that includes at least one slice and at least one tile, where each of said at least one slice and said at least one tile are not all aligned with one another, wherein each of said at least one slice is characterized that it is decoded independently of the other said at least one slice, wherein each of said at least one tile is characterized that it is a rectangular region of said frame and having coding units for said decoding arranged in a raster scan order, wherein said at least one tile of said frame are collectively arranged in a raster scan order of said frame; (b) identifying at least one of said tiles that is not aligned with any of said at least one slice based upon signal within a bitstream of said frame without requiring entropy decoding to identify said signal.

The foregoing and other objectives, features, and advantages of the invention will be more readily understood upon consideration of the following detailed description of the invention, taken in conjunction with the accompanying drawings.

### BRIEF DESCRIPTION OF DRAWINGS

FIG. 1 illustrates a H.264/AVC video encoder.
FIG. 2 illustrates a H.264/AVC video decoder.
FIG. 3 illustrates an exemplary slice structure.
FIG. 4 illustrates another exemplary slice structure.
FIG. 5 illustrates reconstruction of an entropy slice.
FIG. 6 illustrates parallel reconstruction of an entropy slice.
FIG. 7 illustrates a frame with a slice and 9 tiles.
FIG. 8 illustrates a frame with three slices and 3 tiles.
FIGS. 9A and 9B illustrate entropy selection for a tile.
FIGS. 10A and 10B illustrates another entropy selection for a tile.
FIG. 11 illustrates yet another entropy selection for a tile.
FIGS. 12A and 12B illustrates exemplary syntax.

### DESCRIPTION OF EMBODIMENTS

While any video coder/decoder (codec) that uses entropy encoding/ decoding may be accommodated by embodiments described herein, exemplary embodiments are described in relation to an H.264/AVC encoder and an H.264/AVC decoder merely for purposes of illustration. Many video coding techniques are based on a block-based hybrid video-coding approach, wherein the source-coding technique is a hybrid of inter-picture, also considered inter-frame, prediction, intra-picture, also considered intra-frame, prediction and transform coding of a prediction residual. Inter-frame prediction may exploit temporal redundancies, and intra-frame and transform coding of the prediction residual may exploit spatial redundancies.

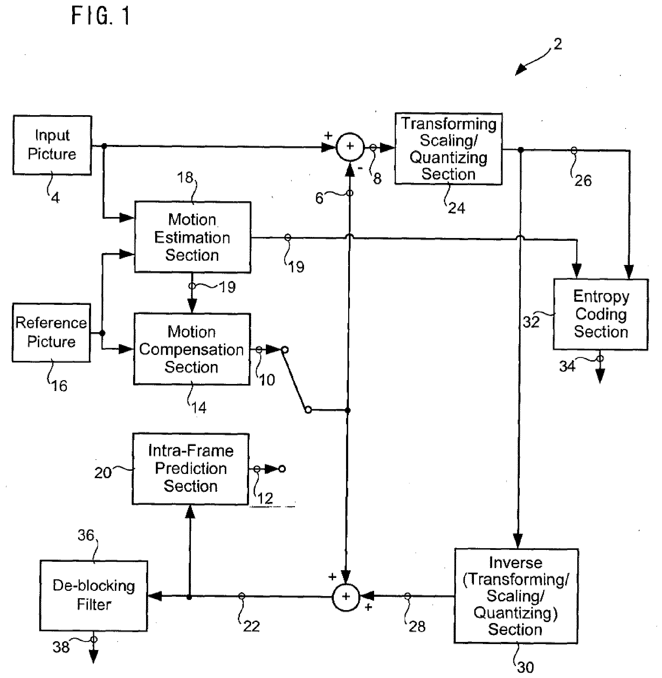

FIG. 1 shows a block diagram of an exemplary H.264/AVC video encoder 2. An input picture 4, also considered a frame, may be presented for encoding. A predicted signal 6 and a residual signal 8 may be produced, wherein the predicted signal 6 may be based on either an inter-frame prediction 10 or an intra-frame prediction 12. The inter-frame prediction 10 may be determined by motion compensation section 14 one or more stored, reference pictures 16, also considered reference frames, using motion information 19 determined by a motion estimation section 18 process between the input frame 4 and the reference frames 16. The intra-frame prediction 12 may be determined by an intra-frame prediction section 20 using a decoded signal 22. The residual signal 8 may be determined by subtracting the input frame 4 from the predicted signal 6. The residual signal 8 is transformed, scaled and quantized by a transforming/scaling/quantizing section 24, thereby producing quantized, transform coefficients 26. The decoded signal 22 may be generated by adding the predicted signal 6 to a signal 28 generated by an inverse (transforming/ scaling/ quantizing) section 30 using the quantized, transform coefficients 26. The motion information 19 and the quantized, transform coefficients 26 may be entropy, coded by an entropy coding section 32 and written to the compressed-video bitstream 34. An output image region 38, for example a portion of the reference frame, may be generated at the encoder 2 by a de-blocking filter 36 using the reconstructed, pre-filtered signal 22. This output frame may be used as a reference frame for the encoding of subsequent input pictures.

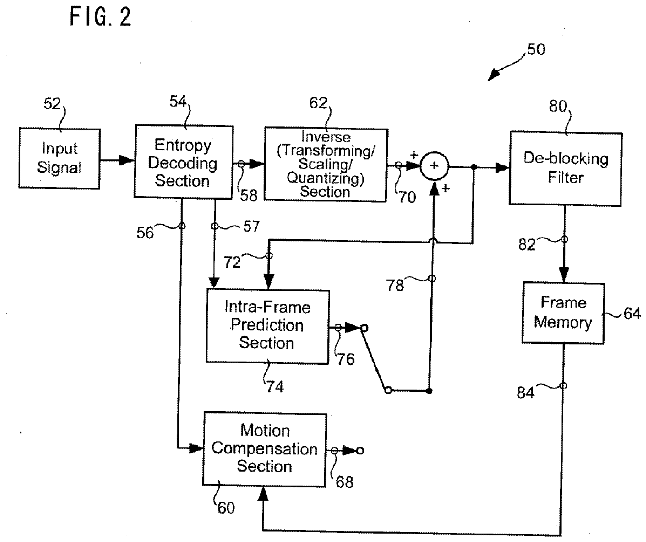

FIG. 2 shows a block diagram of an exemplary H.264/AVC video decoder 50. An input signal 52, also considered a bitstream, may be presented for decoding. Received symbols may be entropy decoded by an entropy decoding section 54, thereby producing motion information 56, intra-prediction information 57, and quantized, scaled, transform coefficients 58. The motion information 56 may be combined by a motion compensation section 60 with a portion of one or more reference frames 84 which may reside in frame memory 64, and an inter-frame prediction 68 may be generated. The quantized, scaled, transform coefficients 58 may be inverse quantized, scaled and inverse transformed by an inverse (transforming/scaling/quantizing) section 62, thereby producing a decoded residual signal 70. The residual signal 70 may be added to a prediction signal 78: either the inter-frame prediction signal 68 or an intra-frame prediction signal 76. The intra-frame prediction signal 76 may be predicted by an intra-frame prediction section 74 from previously decoded information in the current frame 72. The combined signal 72 may be filtered by a de-blocking filter 80 and the filtered signal 82 may be written to frame memory 64.

In H.264/AVC, an input picture may be partitioned into fixed-size macroblocks, wherein each macroblock covers a rectangular picture area of 16×16 samples of the luma component and 8×8 samples of each of the two chroma components. The decoding process of the H.264/AVC standard is specified for processing units which are macroblocks. The entropy decoder 54 parses the syntax elements of the compressed-video bitstream 52 and de-multiplexes them. H.264/AVC specifies two alternative methods of entropy decoding: a low-complexity technique that is based on the usage of context-adaptively switched sets of variable length codes, referred to as CAVLC, and the computationally more demanding technique of context-based adaptively binary arithmetic coding, referred to as CABAC. In both such entropy decoding techniques, decoding of a current symbol may rely on previously, correctly decoded symbols and adaptively updated context models. In addition, different data information, for example, prediction data information, residual data information and different color planes, may be multiplexed together. De-multiplexing may wait until elements are entropy decoded.

After entropy decoding, a macroblock may be reconstructed by obtaining: the residual signal through inverse quantization and the inverse transform, and the prediction signal, either the intra-frame prediction signal or the inter-frame prediction signal. Blocking distortion may be reduced by applying a de-blocking filter to decoded macroblocks. Typically, such subsequent processing begins after the input signal is entropy decoded, thereby resulting in entropy decoding as a potential bottleneck in decoding. Similarly, in codecs in which alternative prediction mechanisms are used, for example, inter-layer prediction in H.264/AVC or inter-layer prediction in other scalable codecs, entropy decoding may be requisite prior to processing at the decoder, thereby making entropy decoding a potential bottleneck.

An input picture comprising a plurality of macroblocks may be partitioned into one or several slices. The values of the samples in the area of the picture that a slice represents may be properly decoded without the use of data from other slices provided that the reference pictures used at the encoder and the decoder are the same and that de-blocking filtering does not use information across slice boundaries. Therefore, entropy decoding and macroblock reconstruction for a slice does not depend on other slices. In particular, the entropy coding state may be reset at the start of each slice. The data in other slices may be marked as unavailable when defining neighborhood availability for both entropy decoding and reconstruction. The slices may be entropy decoded and reconstructed in parallel. No intra prediction and motion-vector prediction is preferably allowed across the boundary of a slice. In contrast, de-blocking filtering may use information across slice boundaries.

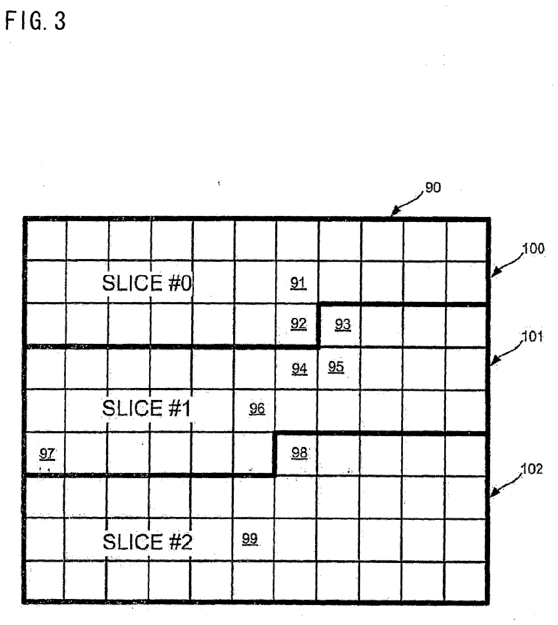

FIG. 3 illustrates an exemplary video picture 90 comprising eleven macroblocks in the horizontal direction and nine macroblocks in the vertical direction (nine exemplary macroblocks labeled 91-99). FIG. 3 illustrates three exemplary slices: a first slice denoted "SLICE #0" 100, a second slice denoted "SLICE #1" 101 and a third slice denoted "SLICE #2" 102. An H.264/AVC decoder may decode and reconstruct the three slices 100, 101, 102 in parallel. Each of the slices may be transmitted in scan line order in a sequential manner. At the beginning of the decoding/reconstruction process for each slice, context models are initialized or reset and macroblocks in other slices are marked as unavailable for both entropy decoding and macroblock reconstruction. Thus, for a macroblock, for example, the macroblock labeled 93, in "SLICE #1," macroblocks (for example, macroblocks labeled 91 and 92) in "SLICE #0" may not be used for context model selection or reconstruction. Whereas, for a macroblock, for example, the macroblock labeled 95, in "SLICE #1," other macroblocks (for example, macroblocks labeled 93 and 94) in "SLICE #1" may be used for context model selection or reconstruction. Therefore, entropy decoding and macroblock reconstruction proceeds serially within a slice. Unless slices are defined using a flexible macroblock ordering (FMO), macroblocks within a slice are processed in the order of a raster scan.

Flexible macroblock ordering defines a slice group to modify how a picture is partitioned into slices. The macroblocks in a slice group are defined by a macroblock-to-slice-group map, which is signaled by the content of the picture parameter set and additional information in the slice headers. The macroblock-to-slice-group map consists of a slice-group identification number for each macroblock in the picture. The slice-group identification number specifies to which slice group the associated macroblock belongs. Each slice group may be partitioned into one or more slices, wherein a slice is a sequence of macroblocks within the same slice group that is processed in the order of a raster scan within the set of macroblocks of a particular slice group. Entropy decoding and macroblock reconstruction proceeds serially within a slice group.

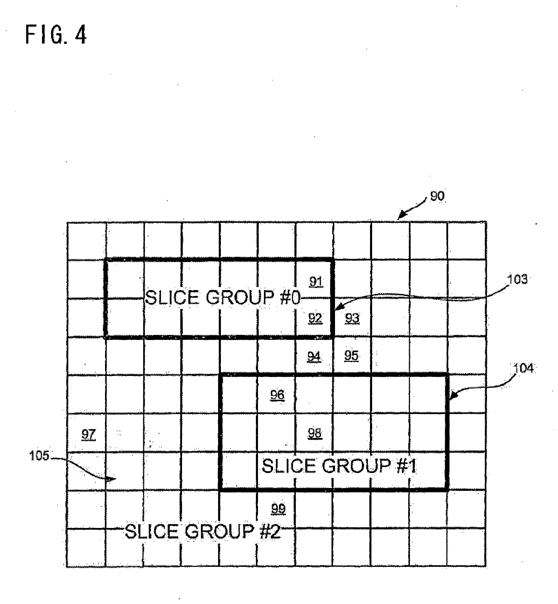

FIG. 4 depicts an exemplary macroblock allocation into three slice groups: a first slice group denoted "SLICE GROUP #0" 103, a second slice group denoted "SLICE GROUP #1" 104 and a third slice group denoted "SLICE GROUP #2" 105. These slice groups 103, 104, 105 may be associated with two foreground regions and a background region, respectively, in the picture 90.

A picture may be partitioned into one or more reconstruction slices, wherein a reconstruction slice may be self-contained in the respect that values of the samples in the area of the picture that the reconstruction slice represents may be correctly reconstructed without use of data from other reconstruction slices, provided that the references pictures used are identical at the encoder and the decoder. All reconstructed macroblocks within a reconstruction slice may be available in the neighborhood definition for reconstruction.

A reconstruction slice may be partitioned into more than one entropy slice, wherein an entropy slice may be self-contained in the respect that symbol values in the area of the picture that the entropy slice represents may be correctly entropy decoded without the use of data from other entropy slices. The entropy coding state may be reset at the decoding start of each entropy slice. The data in other entropy slices may be marked as unavailable when defining neighborhood availability for entropy decoding. Macroblocks in other entropy slices may not be used in a current block's context model selection. The context models may be updated only within an entropy slice. Accordingly, each entropy decoder associated with an entropy slice may maintain its own set of context models.

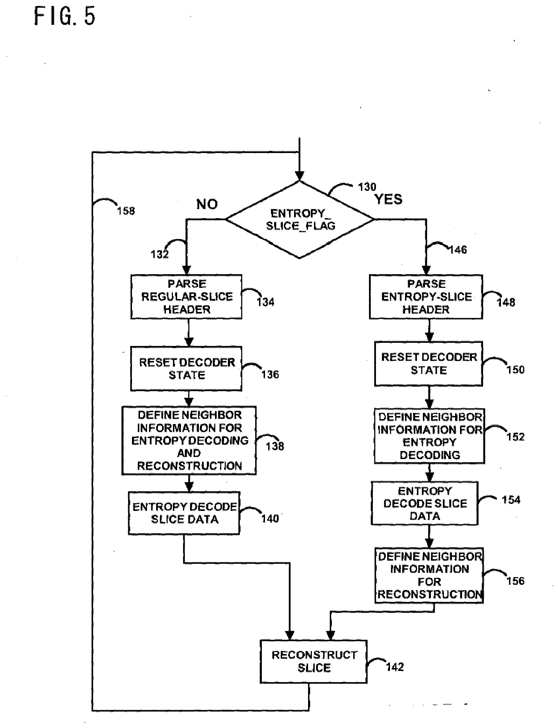

An encoder may determine whether or not to partition a reconstruction slice into entropy slices, and the encoder may signal the decision in the bitstream. The signal may comprise an entropy-slice flag, which may be denoted "entropy_slice_flag". Referring to FIG. 5, an entropy-slice flag may be examined 130, and if the entropy-slice flag indicates that there are no 132 entropy slices associated with a picture, or a reconstruction slice, then the header may be parsed 134 as a regular slice header. The entropy decoder state may be reset 136, and the neighbor information for the entropy decoding and the reconstruction may be defined 138. The slice data may then be entropy decoded 140, and the slice may be reconstructed 142. If the entropy-slice flag indicates there are 146 entropy slices associated with a picture, or a reconstruction slice, then the header may be parsed 148 as an entropy-slice header. The entropy decoder state may be reset 150, the neighbor information for entropy decoding may be defined 152 and the entropy-slice data may be entropy decoded 154. The neighbor information for reconstruction may then be defined 156, and the slice may be reconstructed 142. After slice reconstruction 142, the next slice, or picture, may be examined 158.

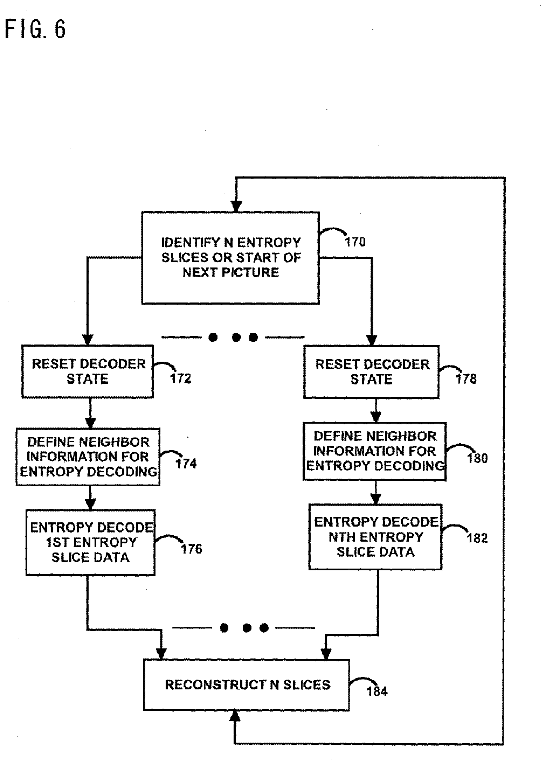

Referring to FIG. 6, the decoder may be capable of parallel decoding and may define its own degree of parallelism, for example, consider a decoder comprising the capability of decoding N entropy slices in parallel. The decoder may identify 170 N entropy slices. If fewer than N entropy slices are available in the current picture, or reconstruction slice, the decoder may decode entropy slices from subsequent pictures, or reconstruction slices, if they are available. Alternatively, the decoder may wait until the current picture, or reconstruction slice, is completely processed before decoding portions of a subsequent picture, or reconstruction slice. After identifying 170 up to N entropy slices, each of the identified entropy slices may be independently entropy decoded. A first entropy slice may be decoded 172-176. The decoding 172-176 of the first entropy slice may comprise resetting the decoder state 172. If CABAC entropy decoding is used, the CABAC state may be reset. The neighbor information for the entropy decoding of the first entropy slice may be defined 174, and the first entropy slice data may be decoded 176. For each of the up to N entropy slices, these steps may be performed (178-182 for the Nth entropy slice). The decoder may reconstruct 184 the entropy slices when all, or a portion of, the entropy slices are entropy decoded.

When there are more than N entropy slices, a decode thread may begin entropy decoding a next entropy slice upon the completion of entropy decoding of an entropy slice. Thus when a thread finishes entropy decoding a low complexity entropy slice, the thread may commence decoding additional entropy slices without waiting for other threads to finish their decoding.

The arrangement of slices, as illustrated in FIG. 3, may be limited to defining each slice between a pair of macroblocks in the image scan order, also known as raster scan or a raster scan order. This arrangement of scan order slices is computationally efficient but does not tend to lend itself to the highly efficient parallel encoding and decoding. Moreover, this scan order definition of slices also does not tend to group smaller localized regions of the image together that are likely to have common characteristics highly suitable for coding efficiency. The arrangement of slices, as illustrated in FIG. 4, is highly flexible in its arrangement but does not tend to lend itself to high efficient parallel encoding or decoding. Moreover, this highly flexible definition of slices is computationally complex to implement in a decoder.

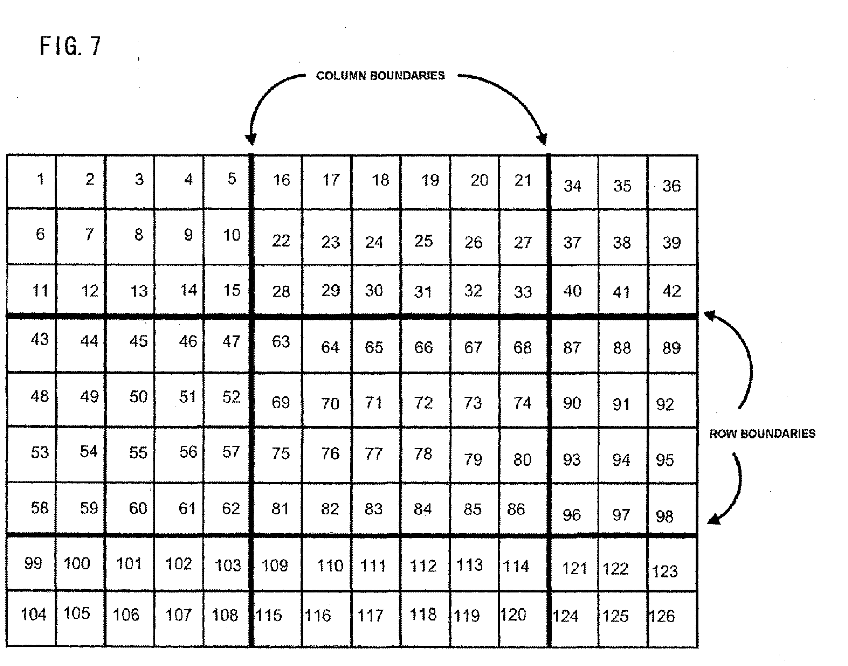

Referring to FIG. 7, a tile technique divides an image into a set of rectangular (inclusive of square) regions. The macroblocks (e.g., largest coding units) within each of the tiles are encoded and decoded in a raster scan order. The arrangement of tiles are likewise encoded and decoded in a raster scan order. Accordingly, there may be any suitable number of column boundaries (e.g., 0 or more) and there may be any suitable number of row boundaries (e.g., 0 or more). Thus, the frame may define one or more slices, such as the one slice illustrated in FIG. 7. In some embodiments, macroblocks located in different tiles are not available for intra-prediction, motion compensation, entropy coding context selection or other processes that rely on neighboring macroblock information.

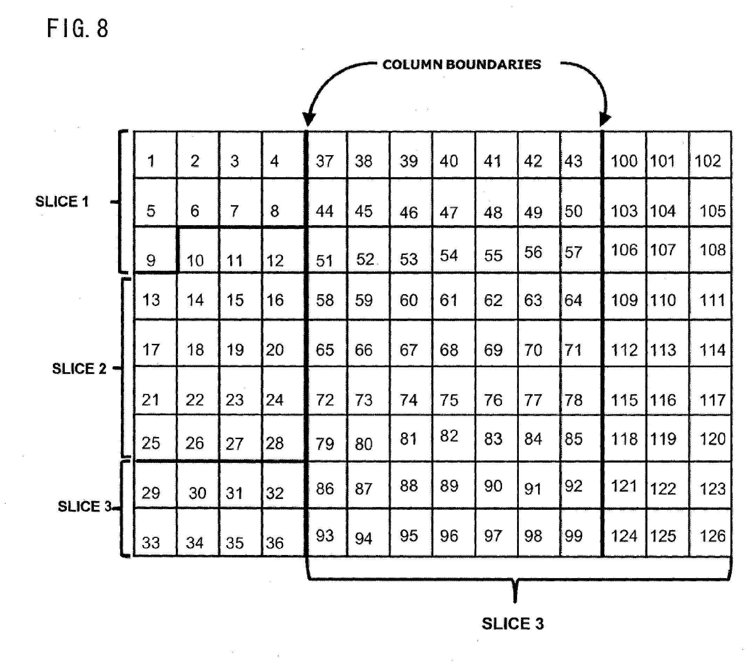

Referring to FIG. 8, the tile technique is shown dividing an image into a set of three rectangular columns. The macroblocks (e.g., largest coding units) within each of the tiles are encoded and decoded in a raster scan order. The tiles are likewise encoded and decoded in a raster scan order. One or more slices may be defined in the scan order of the tiles. Each of the slices are independently decodable. For example, slice 1 may be defined as including macroblocks 1-9, slice 2 may be defined as including macroblocks 10-28, and slice 3 may be defined as including macroblocks 29-126 which spans three tiles. The use of tiles facilitates coding efficiency by processing data in more localized regions of a frame.

In one embodiment, the entropy encoding and decoding process is initialized at the beginning of each tile. At the encoder, this initialization may include the process of writing remaining information in the entropy encoder to the bitstream, a process known as flushing, padding the bitstream with additional data to reach one of a pre-defined set of bitstream positions, and setting the entropy encoder to a known state that is pre-defined or known to both the encoder and decoder. Frequently, the known state is in the form of a matrix of values. Additionally, a pre-defined bitstream location may be a position that is aligned with a multiple number of bits, e.g. byte aligned. At the decoder, this initialization process may include the process of setting the entropy decoder to a known state that is known to both the encoder and decoder and ignoring bits in the bitstream until reading from a pre-defined set of bitstream positions.

In some embodiments, multiple known states are available to the encoder and decoder and may be used for initializing the entropy encoding and/or decoding processes. Traditionally, the known state to be used for initialization is signaled in a slice header with an entropy initialization indicator value. With the tile technique illustrated in FIG. 7 and FIG. 8, tiles and slices are not aligned with one another. Thus, with the tiles and slices not being aligned, there would not traditionally be an entropy initialization indicator value transmitted for tiles that do not contain a first macro-block in raster scan order that is co-located with the first macroblock in a slices. For example referring to FIG. 7, macroblock 1 is initialized using the entropy initialization indicator value that is transmitted in the slice header but there is no similar entropy initialization indicator value for macroblock 16 of the next tile. Similar entropy initialization indicator information is not typically present for macroblocks 34, 43, 63, 87, 99, 109, and 121 for the corresponding tiles for the single slice (which has a slice header for macroblock 1).

Referring to FIG. 8, in a similar manner for the three slices, an entropy initialization indicator value is provided in the slice headers for macroblock 1 of slice 1, provided in the slice header for macroblock 10 of slice 2, and provided in the slice header for macroblock 29 of slice 3. However, in a manner similar to FIG. 7, there lacks an entropy initialization indicator value for the central tile (starting with macroblock 37) and the right hand tile (starting with macroblock 100). Without the entropy initialization indicator value for the middle and right hand tiles, it is problematic to efficiently encode and decode the macroblocks of the tiles in a parallel fashion and with high coding efficiency.

For systems using one or more tiles and one or more slices in a frame, it is preferable to provide the entropy initialization indicator value together with the first macroblock (e.g., largest coding unit) of a tile. For example, together with macroblock 16 of FIG. 7, the entropy initialization indicator value is provided to explicitly select the entropy initialization information. The explicit determination may use any suitable technique, such as for example, indicate that a previous entropy initialization indicator value should be used, such as that in a previous slice header, or otherwise send the entropy initialization indicator value associated with the respective macroblock / tile. In this manner, while the slices may include a header that includes an entropy index value, the first macroblock in a tile may likewise include an entropy initialization indicator value.

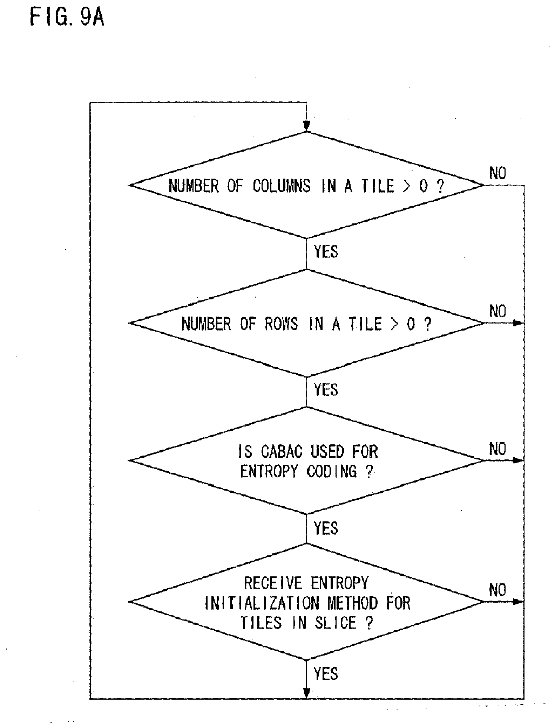

Referring to FIG. 9A, the encoding of this additional information may be as follows:
If (num_column_minus1>0 && num_rows_minus1>0) then
tile_cabac_init_idc_present_flag
num_column_minus1>0 determines if the number of columns in a tile is not zero and num_rows_minus1>0 determines if the number of rows in a tile is not zero, which both effectively determine if tiles are being used in the encoding / decoding. If tiles are being used, then the tile_cabac_init_idc_present_flag is a flag indicating how the entropy initialization indicator values are communicated from an encoder to a decoder. For example, if the flag is set to a first value then a first option may be selected such as using a previously communicated entropy initialization indicator value. As a specific example, this previously communicated entropy initialization indicator value may be equal to the entropy initialization indicator value transmitted in the slice header corresponding to the slice containing the first macroblock of the tile. For example, if the flag is set to a second value then a second option may be selected such as the entropy initialization indicator value is being provided in the bitstream for the corresponding tile. As a specific example, the entropy initialization indicator value is provided within in the data corresponding to the first macro-block of the tile.

The syntax for signaling the flag indication how the entropy initialization indicator values are communicated from an encoder to a decoder may be as follows:

```
      num_columns_minus 1
      num_rows_minus1
      if (num_column_minus1>0 && num_rows_minus1>0 {
             tile_boundary_dependence_idr
          uniform_spacing_idr
          if( uniform_spacing_idr !=1) {
             for (i=0; i<num_columns_minus1; i++)
                columnWidth[i]
             for (i=0; i<num_rows_minus1; i++)
                    rowHeight[i]
             }
          if( entropy_coding_mode==1)
     tile_cabac_init_idc_present_flag
     }
```

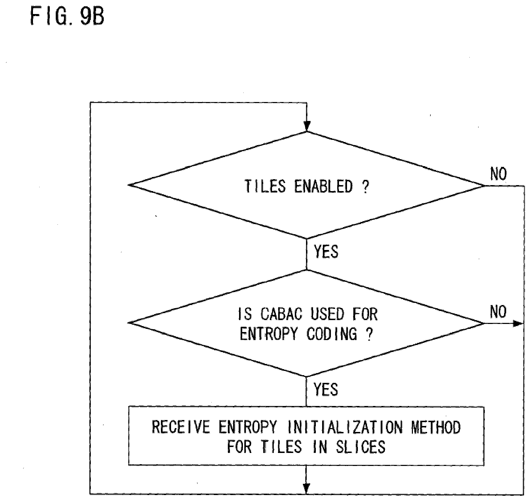

Referring to Figure 9B, other techniques may be used to determine if tiles are being used, such as including a flag in a sequence parameter set (e.g., information regarding a sequence of frames) and/or a picture parameter set (e.g., information regarding a particular frame).

The syntax may be as follows:

```
      tile_enable_flag
      if (tile_enable_flag) {
      num_columns_minus 1
      num_rows_minus1
             tile_boundary_dependence_idr
          uniform_spacing_idr
          if( uniform_spacing_idr !=1) {
             for (i=0; i<num_columns_minus1; i++)
                columnWidth[i]
             for (i=0; i<num_rows_minus1; i++)
                    rowHeight[i]
             }
       if( entropy_coding_mode==1)
             tile_ca bac_init_idc_present_flag
       }
      tile_enable_flag determines if tiles are used in the current
 picture.
```

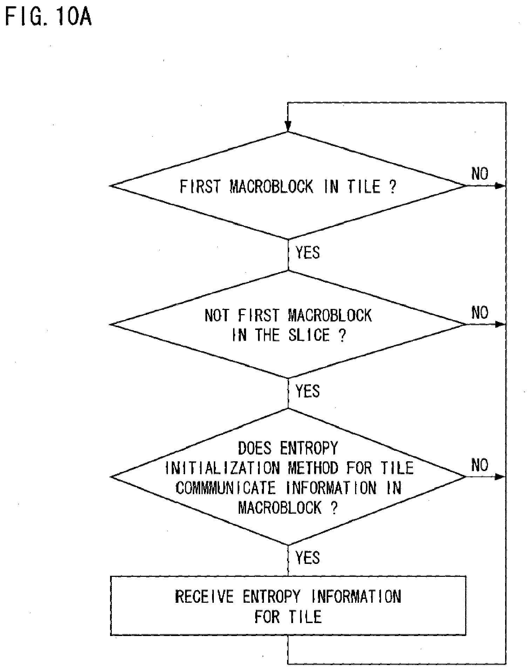

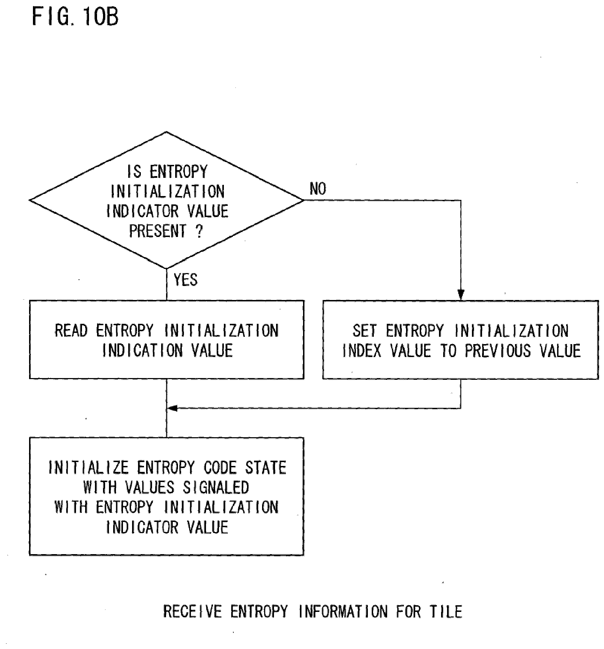

Referring to FIGS. 10A and 10B, a technique to provide a suitable entropy initialization indicator value information for a tile may be as follows.

First, check to see if the macroblock (e.g., coding unit) is the first macroblock in a tile. Thus, the technique determines the first macroblock of a tile that may include an entropy initialization indicator value. Referring to FIG. 7, this refers to macroblocks 1, 16, 34, 43, 63, 87, 99, 109, and 121. Referring to FIG. 8, this refers to macroblocks 1, 37, and 100.

Second, check to see if the first macroblock (e.g., coding unit) of the tile is not the first macroblock (e.g., coding unit) of the slice. Thus, the technique identifies additional tiles within the slice. Referring to FIG. 7, this refers to macroblocks 16, 34, 43, 63, 87, 99, 109, and 121. Referring to FIG. 8, this refers to macroblocks 37 and 100.

Third, check to see if the tile_cabac_init_idc_flag is equal to a first value and if tiles are enabled. In one specific embodiment, this value is equal to 0. In a second embodiment, this value is equal to 1. In an additional embodiment, tiles are enabled when (num_column_minus1>0 && num_rows_minus1>0). In another embodiment, tiles are enabled when tile_enable_flag equal to 1.

For such identified macroblocks the cabac_init_idc_present_flag may be set.

Then the system may only signal cabac_init_idc_flag if tile_cabac_init_idc_flag is present and if (num_column_minus1>0 && num_rows_minus1>0). Thus, the system only sends the entropy information if tiles are being used and the flag indicates the entropy information is being sent (i.e., cabac_init_idc flag).

The coding syntax may be as follows:

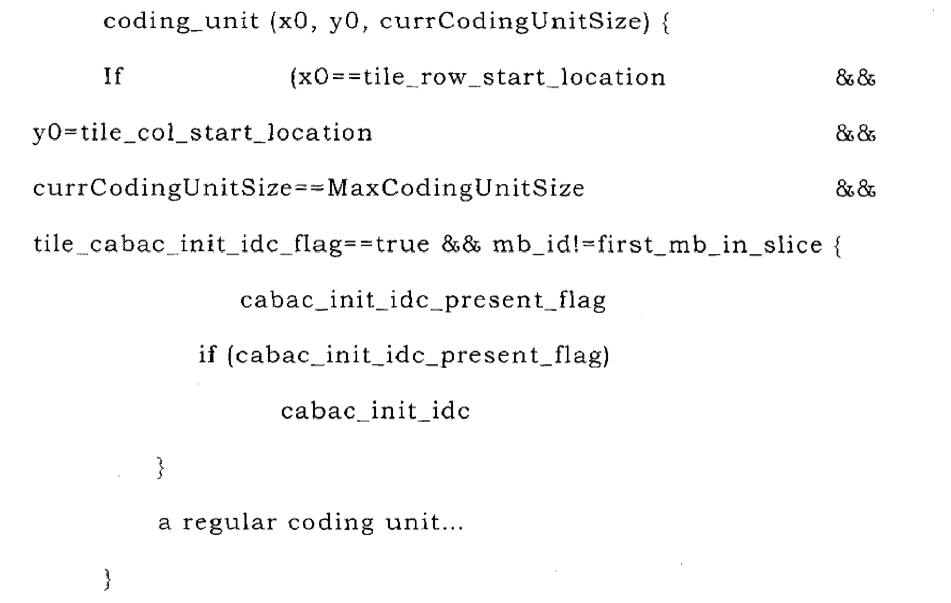

In general, one or more flag(s) associated with the first macroblock (e.g., coding unit) of a tile not associated with the first macroblock of a slice may define an entropy initialization indicator value. A flag may indicate whether the entropy initialization indicator value is previously provided information, a default value, or otherwise entropy initialization indicator value to be provided.

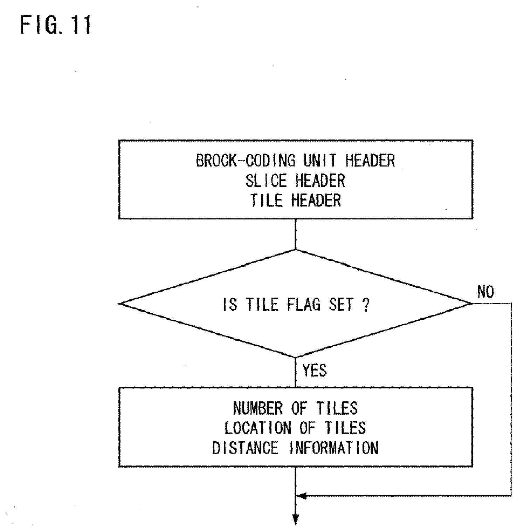

Referring again to FIG. 7, the decoder knows the location of macroblock 16 in the picture frame but due to entropy encoding is not aware of the positions of bits describing macroblock 16 in the bitstream until macroblock 15 is entropy decoded. This manner of decoding and identifying the next macroblock maintains a low bit overhead, which is desirable. However, it does not facilitate tiles to be decoded in parallel. To increase the ability to identify a specific position in the bitstream for a specific tile in a frame, so that the different tiles may be simultaneously decoded in parallel in the decoder without waiting for completion of the entropy decoding, a signal may be included in the bitstream identifying the location of tiles in the bitstream. Referring to FIG. 11, the signaling of the location of tiles in the bitstream is preferably provided in the header of a slice. If a flag indicates that the location of tiles in the bitstream is transmitted within the slice, then in addition to the location within the first macroblock of each of the tile(s) within the slice it also preferably includes the number of such tiles within the frame. Further, the location information may be included for only a selected set of tiles, if desired.

The coding syntax may be as follows:

```
      tile_locations_flag
       if (tile_location_flag) {
        tile_locations()
      }
       tile_locations()
      {
      for (i=0; i<num_of_tiles_minusl; i++) {
       tile_offset[i]
      }
      }
      tile_locations_flag signals if the tile locations are
 transmitted in the bitstream. The tile_offset[i] (tile distance
 information) may be signaled using absolute location values or
 differential size values (change in tile size with respect to
 previously coded tile) or any suitable technique.
```

While this technique has low overhead, the encoder can not generally transmit the bitstream until all the tiles are encoded.

In some embodiments it is desirable to include data related to the largest absolute location value (tile distance information) or largest differential size value (tile distance information), also considered a largest value, of sequential tiles. With such information, the encoder can transmit only the number of bits necessary to support the identified largest value; the decoder can receive only the number of bits necessary to support the identified largest value. For example, with a relatively small largest value only a small bit depth is necessary for the tile location information. For example, with a relatively large largest value, a large bit depth is necessary for the tile location information.

As another technique to increase the ability to identify different tiles, so that the different tiles may be processed in parallel in the decoder without waiting for the entropy decoding, markers within the bitstream associated with the start of each tile may be used. These tile markers are included within the bitstream in such a manner that they can be identified without entropy decoding of that particular portion of the bitstream. For example, the markers may begin with a start code, which is a sequence of bits that is only present in the bitstream as marker data. Furthermore, the marker may include additional headers associated with a tile and/or the first macroblock of the tile. In this manner the encoder can write each tile to the bitstream after it is encoded without waiting until all the tiles are encoded, although the bit rate is increased as a result. In addition, the decoder can parse the bitstream to identify the different tiles in a more efficient manner, especially when used in conjunction with buffering.

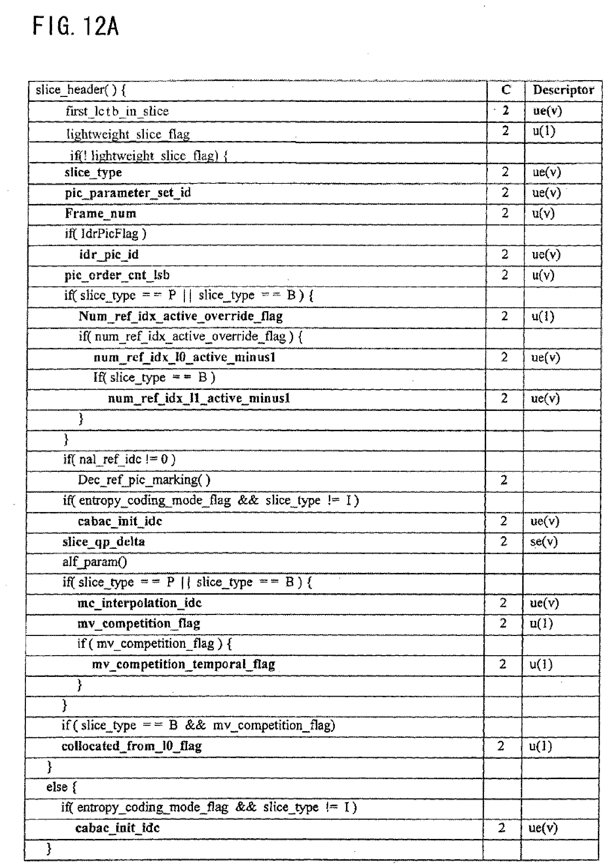

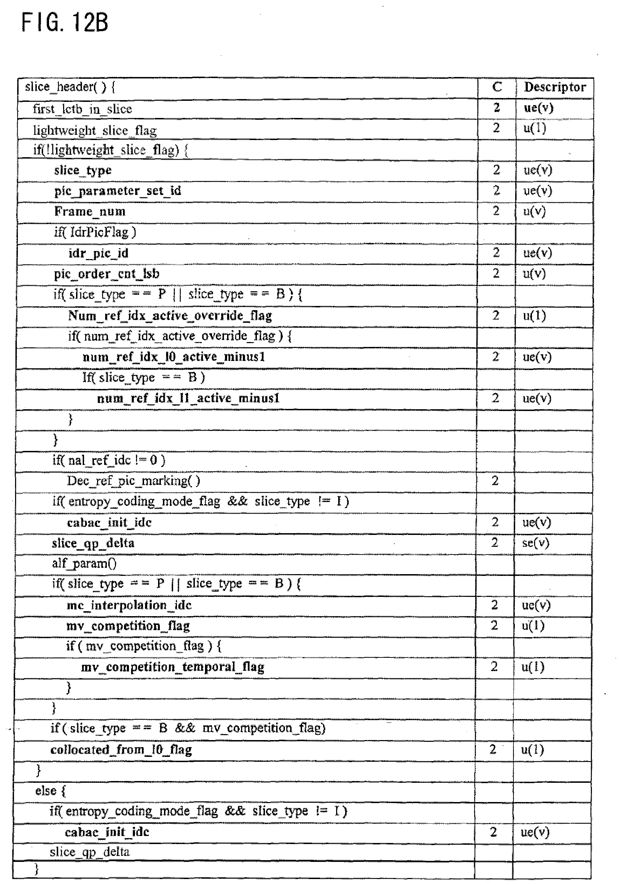

The tile headers may be similar to the slice headers, although less information is typically included. The principal information required is the macroblock number of the next block and entropy initialization data and slice index (indicating, to which slice the starting CU in the tile belongs). The coding syntax of such a tile header may be as illustrated in FIG. 12A. Alternatively, the principal information may also include the initial quantization parameter. The coding syntax of such a tile header may be as illustrated in FIG. 12B. Values that is not transmitted in the slice header and not in the tile header may be reset to the values transmitted in the slice header.

In some embodiments, markers are included in the bitstream and associated with the start of a tile. However, markers may not be included for every tile in the bitstream. This facilitates and encoder and decoder to operate a different levels of parallelism. For example, an encoder could use 64 tiles while only including 4 markers in the bitstream. This enables parallel encoding with 64 processes and parallel decoding with 4 processes. In some embodiments, the number of markers in the bitstream is specified in a manner known both to the encoder and decoder. For example, the number of markers may be signaled in the bitstream or defined with a profile or level.

In some embodiments, location data is included in the bitstream and associated with the start of a tile. However, location data may not be included for every tile in the bitstream. This facilitates and encoder and decoder to operate a different levels of parallelism. For example, an encoder could use 64 tiles while only including 4 locations in the bitstream. This enables parallel encoding with 64 processes and parallel decoding with 4 processes. In some embodiments, the number of locations in the bitstream is specified in a manner known both to the encoder and decoder. For example, the number of markers may be signaled in the bitstream or defined with a profile or level.

The terms and expressions which have been employed in the foregoing specification are used therein as terms of description and not of limitation, and there is no intention, in the use of such terms and expressions, of excluding equivalents of the features shown and described or portions thereof, it being recognized that the scope of the invention is defined and limited only by the claims which follow.

The invention being thus described, it will be obvious that the same way may be varied in many ways. Such variations are not to be regarded as a departure from the spirit and scope of the invention, and all such modifications as would be obvious to one skilled in the art are intended to be included within the scope of the following claims.

According to a first aspect,a method for decoding video is provided comprising:
(a) receiving a frame of said video that includes at least one slice and at least one tile, wherein each of said at least one slice is characterized that it is decoded independently of the other said at least one slice, wherein each of said at least one tile is characterized that it is a rectangular region of said frame and having coding units for said decoding arranged in a raster scan order, wherein said at least one tile of said frame are collectively arranged in a raster scan order of said frame;
(b) receiving entropy information suitable for decoding at least one of said tiles;
(c) receiving information indicating that location of at least one tile is transmitted within a slice;
(d) receiving information indicating said location and information indicating number of said at least one tile.

According to a second aspect, which is provided in addition to the first aspect, the said location is differential size.

According to a third aspect which is provided in addition to the second aspect, the said differential size is the amount of change in region size with respect to previously coded region.

According to a fourth aspect which is provided in addition to the first aspect, a method for decoding video is provided comprising:
(a) receiving a frame of said video that includes at least one slice and at least one tile, where each of said at least one slice and said at least one tile are not all aligned with one another, wherein each of said at least one slice is characterized that it is decoded independently of the other said at least one slice, wherein each of said at least one tile is characterized that it is a rectangular region of said frame and having coding units for said decoding arranged in a raster scan order, wherein said at least one tile of said frame are collectively arranged in a raster scan order of said frame;
(b) receiving entropy information suitable for decoding at least one of said tiles that is not aligned with any of said at least one slice.

According to a fifth aspect, which is provided in addition to the fourth aspect, at least one slice includes a plurality of slices.

According to a sixth aspect, which is provided in addition to the fifth aspect, at least one tile includes a plurality of tiles.

According to a seventh aspect, which is provided in addition to the sixth aspect, the said entropy information is identified by a flag.

According to an eighth aspect, which is provided in addition to the sixth aspect, the said entropy information is provided in a header

According to a nineth aspect,which is provided in addition to the seventh aspect, the said entropy information is associated with one of at least one slice.

According to a tenth aspect, which is provided in addition to the eighth aspect, the said header is associated with a coding unit of the said frame.

According to an eleventh aspect, which is provided in addition to the eighth aspect, the said header is associated with one of said at least one tile.

According to a twelfth aspect, which is provided in addition to the eighth aspect, the said header is associated with one of said at least one slice.

According to a thirteenth aspect, which is provided in addition to the eighth aspect, the said header is associated with a sequence parameter set.

According to a fourteenth aspect, which is provided in addition to the eighth aspect the said header is associated with a picture parameter set.

According to a fifteenth aspect, which is provided in addition to the fourth aspect, the said entropy information includes tile distance information.

According to a sixteenth aspect,a method for decoding video is provided comprising:
(a) receiving a frame of said video that includes at least one slice and at least one tile, where each of said at least one slice and said at least one tile are not all aligned with one another, wherein each of said at least one slice is characterized that it is decoded independently of the other said at least one slice, wherein each of said at least one tile is characterized that it is a rectangular region of said frame and having coding units for said decoding arranged in a raster scan order, wherein said at least one tile of said frame are collectively arranged in a raster scan order of said frame;
(b) identifying at least one of said tiles that is not aligned with any of said at least one slice based upon signal within a bitstream of said frame without requiring entropy decoding to identify said signal.

According to a seventeenth aspect,which is provided in addition to the sixteenth aspect, including receiving entropy information suitable for decoding at least one of said tiles that is not aligned with any of said at least one slice.

According to an eighteenth aspect,which is provided in addition to the sixteenth aspect, the said frame includes a first plurality of said tiles in a raster scan order which are entropy decoded simultaneously without requiring completion of entropy decoding of an immediately previous one of said first plurality of said tiles for an immediately next one of said first plurality of tiles.

According to a nineteenth aspect,which is provided in addition to the eighteenth aspect, the said signal indicates the location of a tile within a bitstream of said frame.

According to a twentieth aspect,which is provided in addition to the nineteenth aspect, the said signal indicates the number of slices within said frame.

According to a twenty-first aspect,which is provided in addition to the seventeenth aspect, the said entropy information information includes tile distance information.

According to a twenty-second aspect,which is provided in addition to the sixteenth aspect, the said signal is included in a header within a bitstream associated with said frame.

According to a twenty-third aspect, the said header is associated with a coding unit.

According to a twenty-fourth aspect,which is provided in addition to the twenty-second aspect, the said header is associated with a tile.

## Claims

1. A method for encoding video comprising:
presenting a frame of said video for encoding that includes at least one reconstruction slice,
wherein each of said at least one reconstruction slice is characterized that it is encoded independently of the other said at least one reconstruction slice,
determining (S130) whether to partition the reconstruction slice into more than one entropy slices,
wherein each of said entropy slices is characterized that it is encoded independently of the other more than one entropy slices,
encoding, within a bitstream that includes the frame, a signal based on the decision of the determination.

2. Method of claim 1, wherein the signal comprises an entropy-slice flag.

3. Method of any of the preceding claims, wherein
in case the signal indicates (S130:YES) that more than one entropy slices are associated with the reconstruction slice, the method comprises a step of parsing (148) a header as an entropy-slice header; and/or
in case the signal indicates (S130: NO) that not more than one entropy slices are associated with the reconstruction slice, the method comprises a step of parsing (134) a header as a regular slice header.

4. Method of any of the preceding claims, wherein
in case the signal indicates (S130:YES) that more than one entropy slices are associated with the reconstruction slice, the method comprises a step of resetting (150) an entropy coding state at the start of each of the more than one entropy slices; and/or
in case the signal indicates (S130: NO) that not more than one entropy slices are associated with the reconstruction slice, the method comprises a step of resetting (136) an entropy coding state at the start of the reconstruction slice.

5. Method of any of the preceding claims, wherein
in case the signal indicates (S130:YES) that more than one entropy slices are associated with the reconstruction slice, the method comprises a step of defining (152) neighbor information for entropy decoding for each of the more than one entropy slices; and/or
in case the signal indicates (S130:NO) that not more than one entropy slices are associated with the reconstruction slice, the method comprises a step of defining (138) neighbor information for entropy decoding and reconstructing the reconstruction slice.

6. Method of any of the preceding claims, wherein
in case the signal indicates (S130:YES) that more than one entropy slices are associated with the reconstruction slice, the method comprises a step of entropy decoding (154) entropy-slice data; and/or
in case the signal indicates (S130:NO) that not more than one entropy slices are associated with the reconstruction slice, the method comprises a step of entropy decoding (140) slice data.

7. Method of any of the preceding claims, wherein
in case the signal indicates (S130:YES) that more than one entropy slices are associated with the reconstruction slice, the method comprises, after entropy decoding (154) entropy-slice data, a step of defining (156) neighbor information for reconstructing the reconstruction slice.

8. Encoder for carrying out the method of claims 1 to 7.

9. A method for decoding video comprising:
receiving a frame of said video;
decoding the frame of said video in a bitsream that includes a signal that a reconstruction slice is portioned into more than one entropy slides,
wherein each of said at least one reconstruction slice is characterized that it is decoded independently of the other said at least one reconstruction slice, and
wherein each of said entropy slices is characterized that it is decoded independently of the other more than one entropy slices,
identifying (170) more than one entropy slides; and
entropy decode each of the more than one entropy slides.

10. Decoder for carrying out the method of claim 9.
